# EUROPÄISCHE PATENTSCHRIFT

(11) **EP 2 087 047 B1**
(45) Veröffentlichungstag und Bekanntmachung des Hinweises auf die Patenterteilung: **23.02.2011**
(21) Anmeldenummer: 07819394.3
(22) Anmeldetag: 27.10.2007
(51) Int. Cl.: C09C 1/64, C09C 1/66, C09D 5/36, C09D 5/44

(54) **METALLEFFEKTPIGMENTE FÜR DEN EINSATZ IN DER KATHODISCHEN ELEKTROTAUCHLACKIERUNG,VERFAHREN ZU DEREN HERSTELLUNG UND VERWENDUNG DERSELBEN SOWIE ELEKTROTAUCHLACK.**
METAL EFFECT PIGMENTS FOR USE IN THE CATHODIC ELECTRODEPOSITION PAINTING, METHOD FOR THE PRODUCTION AND USE OF THE SAME, AND ELECTRODEPOSITION PAINT
PIGMENTS À EFFET MÉTALLIQUE POUR L'UTILISATION EN PEINTURE ÉLECTROPHORÉTIQUE CATHODIQUE, PROCÉDÉ POUR LEUR FABRICATION ET UTILISATION DE CEUX-CI AINSI QUE PEINTURE ÉLECTROPHORÉTIQUE

(30) Priorität: 31.10.2006 DE 102006051893
(43) Veröffentlichungstag der Anmeldung: 12.08.2009
(73) Patentinhaber: Eckart GmbH, 91235 Hartenstein (DE)
(72) Erfinder: WEISS, Harald, 90765 Fürth (DE); SCHRAMM, Christian, 31217 Hersbruck (DE); SCHMIDT, Carolin, 91235 Velden (DE)
(74) Vertreter: LOUIS, PÖHLAU, LOHRENTZ
(86) Internationale Anmeldenummer: PCT/EP2007/009351
(87) Internationale Veröffentlichungsnummer: WO 2008/052720

(56) Entgegenhaltungen:
- WO-A-2005/063897
- US-A- 4 213 886

## Beschreibung

Die Erfindung betrifft Pigmente auf Basis von plättchenförmigen Metalleffektpigmenten, die bei der kathodischen Elektrotauchlackierung abgeschieden werden können. Die Erfindung betrifft ferner ein Verfahren zur Herstellung dieser Elektrotauchlackpigmente als auch deren Verwendung in einem kathodischen Elektrotauchlack oder bei der kathodischen Elektrotauchlackierung. Die Erfindung betrifft schließlich auch einen kathodischen Elektrotauchlack.

Die Elektrotauchlackierung (ETL) ist ein Verfahren zur Applikation bestimmter wasserlöslicher Lacke, sogenannter Elektrotauchlacke, auf elektrisch leitfähigen Untergründen, wie beispielsweise einem Werkstück. Zwischen einem in ein Lackbad eingetauchten Werkstück und einer Gegenelektrode wird ein elektrisches Gleichspannungsfeld angelegt. Es wird dabei unterschieden zwischen der anodischen Abscheidung, der sogenannten anodischen Elektrotauchlackierung (ATL), bei der das Werkstück als Anode oder Pluspol geschaltet ist, und der kathodischen Abscheidung, der sogenannten kathodischen Elektrotauchlackierung (KTL), bei der das Werkstück als Kathode oder als Minuspol geschaltet ist.

Das Lackbindemittel enthält funktionelle Gruppen bestimmter Polarität, die durch Neutralisation in Salzform und dadurch in Wasser kolloidal gelöst vorliegen. In der Nähe der Elektrode (innerhalb der Diffusionsgrenzschicht) entstehen aufgrund der Hydrolyse bei der KTL Hydroxidionen bzw. bei der ATL H⁺-lonen. Diese Ionen reagieren mit dem Bindemittelsalz, wobei die funktionalisierten Bindemittel ihre Salzform verlieren ("Aussalzen"), wasserunlöslich werden und an der Oberfläche des Werkstückes koagulieren. Im weiteren Verlauf verlieren die koagulierten

Bindemittelteilchen infolge von Elektroosmosevorgängen an Wasser, wobei eine weitere Verdichtung auftritt. Schließlich wird das Werkstück dem Tauchbad entnommen, in einem mehrstufigen Spülprozeß von nicht koagulierten Lackteilchen befreit und bei Temperaturen von 150-190 °C eingebrannt (Brock, Groteklaes, Mischke, "Lehrbuch der Lacktechnologie" 2. Auflage, Vincentz Verlag1998, S.288 ff).

Die Elektrotauchlackierung hat gegenüber konventionellen Lackierverfahren wie der Nasslackierung oder Pulverlackierung mehrere wirtschaftliche und ökologische Vorteile.

In erster Linie ist hier die verhältnismäßig exakt einstellbare Schichtdicke zu nennen. Im Vergleich mit Pulverlackierungen werden bei der Elektrotauchlackierung auch schwer zugängliche Stellen des Werkstücks einheitlich lackiert. Dies resultiert aus folgender Tatsache: zunächst findet die Abscheidung des Bindemittels an Stellen hoher Feldstärke wie Ecken und Kanten statt. Der sich bildende Film weist jedoch einen hohen elektrischen Widerstand auf. Daher verschieben sich die Feldlinien zu anderen Bereichen des Werkstücks und konzentrieren sich am Schluss des Beschichtungsvorganges ganz auf die unzugänglichsten Stellen, wie beispielsweise im Inneren des Werkstückes liegende Bereiche oder Stellen (Innenbeschichtung). Die Beschichtung besonders schwer zugänglicher Stellen eines Werkstücks kann durch das Anbringen von Hilfselektroden nochmals verbessert werden. Mit der Elektrotauchlackierung (ETL) sind mithin beliebig geformte Werkstücke lackierbar, solange sie elektrisch leitfähig sind. Mit der ETL sind weiterhin vorteilhaft Eigenschaften wie minimale Lösemittelemissionen, optimale Materialausbeute und Nichtbrennbarkeit verbunden. Man erhält tropfen- und läuferfreie Anstriche. Die Elektrotauchlackierung wird automatisiert durchgeführt und ist dadurch ein sehr preisgünstiges Lackierverfahren, zumal sie sich bei verhältnismäßig geringen Stromdichten von einigen mA/cm² durchführen lässt.

Aufgrund des einfachen und höchst kostengünstigen Applikationsverfahrens findet die Elektrotauchlackierung zur Zeit in zahlreichen Systemen ihren Einsatz. Am gängigsten sind Grundierungen, z. B. bei der Automobilserienlackierung, und einschichtige Decklackierungen. ETL-Lackierungen finden sich beispielsweise auf Radiatoren, Schaltschränken, Büromöbeln, im Bau, bei Eisen- und Haushaltswaren, in der Lagertechnik bzw. beim Regalbau, in der Klima- und Lichttechnik und im Apparate- und Maschinenbau.

Gegenüber dem älteren Verfahren, der anodischen Tauchlackierung (ATL), hat sich seit Mitte der 70er Jahre die kathodische Tauchlackierung (KTL) zunehmend durchgesetzt. Sie weist verschiedene Vorteile auf: Neben einem verbesserten Korrosionsschutz sind gleichmäßige Schichtdickenverteilung sowie ein besserer Umgriff und gute Kantenabdeckung zu nennen.

Anwendung findet die KTL insbesondere in der Karosseriebeschichtung. Durch dieses Verfahren wird zum einen ein Korrosionsschutz erreicht, zum anderen schützt die Beschichtung vor Steinschlag. Die KTL kann für alle metallischen Substrate als Korrosionsschutzbeschichtung verwendet werden, hier sind beispielsweise Träger oder Regale für den Außeneinsatz zu nennen. Die Umweltverträglichkeit aufgrund der weitgehenden Abwesenheit von organischem Lösungsmittel rundet die Vorteile der kathodischen Tauchlackierung als höchst effizientes und attraktives Beschichtungsverfahren ab.

Bisher im Gebrauch befindliche Elektrotauchlacke sind insbesondere Wasserlacke, die als Bindemittel meist selbst- oder fremdvernetzende Kunstharze enthalten, die durch Protonieren mit Säure in Wasser dispergiert werden können. Aus den in den Kunstharzen enthaltenen funktionellen Gruppen entstehen durch Protonieren Ammonium-, Phosphonium- oder Sulfoniumgruppen. Bei den Kunstharzen handelt es sich beispielsweise um primäre oder tertiäre Aminogruppen enthaltende Polymerisations-, Polyadditions- oder Polykondensationsprodukte wie Amino-Epoxidharze, Amino-Poly(meth)acrylatharze oder Amino-Polyurethanharze. Die Elektrotauchlacke können konventionelle Farbpigmente enthalten, wobei es sich i.d.R. um organische und anorganische Farbpigmente handelt. Die Palette der tatsächlich kommerziell eingesetzten Farbtöne ist jedoch eng begrenzt. Die Verwendung von Effektpigmenten im Elektrotauchlack ist bisher kommerziell nicht bekannt.

Das Becken der KTL enthält Bindemittel, Pigmentpaste, wassermischbare organische Lösemittel und Wasser. Wesentlicher Bestandteil von Bindemittel und Pigmentpaste ist häufig Epoxidharz. Bindemittel und Pigmentpaste machen den Hauptanteil des etwa 20 %-igen Feststoffgehalts des Lacks aus. Der Elektrotauchlack besteht weiter zu etwa 80 Gew.-% aus Wasser. Hinzu kommen ein geringer Teil organische Lösemittel (1-2 %), Säuren (0,4 %) und Additive.

Das Epoxidharz wird durch Zugabe eines Neutralisationsmittels in eine wasserdispergierbare Form gebracht. Dafür wird eine organische Säure verwendet (hauptsächlich Essigsäure). Oft wird nur ein Teil der funktionellen Gruppen mit Neutralisationsmittel umgesetzt. Das molare Verhältnis von Säure zu funktioneller Gruppe wird als Neutralisationsgrad bezeichnet. Ein Neutralisationsgrad von etwa 30 % reicht aus, um die gewünschte Wasserdispergierbarkeit zu erreichen. Auch zum Einstellen des leicht sauren pH-Wertes im KTL-Becken wird eine organische Säure verwendet.

Die nicht vorveröffentlichte DE 10 2005 020 763.4 beschreibt Metalleffektpigmente, die in anodischen Elektrotauchlacken Verwendung finden können.

Die EP 0 477 433 A1 offenbart mit Kunstharzen beschichtete Metalleffektpigmente, wobei zwischen Metalleffektpigmentoberfläche und der Kunstharzschicht eine sehr dünne Siloxanschicht als Haftvermittler aufgebracht ist. Dieser Schrift ist kein Hinweis zur Elektrotauchlackierung zu entnehmen.

Aus der EP 0 393 579 B1 ist ein metallpigmenthaltiges Überzugsmittel auf wässeriger Basis bekannt, das mittels Elektrobeschichten auf ein Substrat aufbringbar sein soll. Die EP 0 393 579 B1 offenbart keine für die kathodische Elektrotauchlackierung geeigneten Metalleffektpigmente.

Die US4213886 A offenbart verbesserte Beschichtungszusammensetzungen enthaltend ein plättchenförmiges Al-Pigment, welches mit einem ethylenischungesättigen Silan beschichtet ist, wobei diese Silane u.a. mit einem aminofunktionalisierten Acrylmonomer umgesetzt werden.

Die WO2005063897 A offenbart ein Verfahren zur Herstellung eines beschichteten Metallpigmentes, umfassend die Schritte: a) Herstellen einer Lösung oder Dispersion eines oligomeren und/oder polymeren Bindemittels in einem organischen Lösemittel; b) Beschichten des Metallpigmentes mit dem Bindemittel durch i) Dispergieren des Metallpigmentes in der Lösung oder Dispersion von a) und anschließendem Versprühen oder ii) Versprühen der Lösung oder Dispersion aus a) auf in einem Gasstrom verwirbelte Metallpigmente, c) Trockenen der mit dem Bindemittel beschichteten Metallpigmente in einem bewegten Gasstrom.

Aufgabe der vorliegenden Erfindung ist es, Metalleffektpigmente bereit zu stellen, die bei der kathodischen Elektrotauchlackierung auf einem Werkstück in einem Lack abgeschieden werden können.

Die Metalleffektpigmente müssen korrosionsstabil gegenüber dem wässrigen Elektrotauchlackmedium sein und sich auch nach mehr als 60 Tagen Baddauer reproduzierbar abscheiden lassen. Damit hergestellte Elektrotauchlacküberzüge sollen einen metallischen Effekt aufweisen, der in seiner optischen Qualität vorzugsweise mindestens derjenigen von Pulverlackierungen entspricht.

Ferner ist es eine weitere Aufgabe der vorliegenden Erfindung, ein Verfahren zur Herstellung derartiger Metalleffektpigmente zu finden.

Die Aufgabe wurde gelöst durch Bereitstellung von Elektrotauchlackpigmenten, die plättchenförmige, mit wenigstens einem Beschichtungsmittel beschichtete Metalleffektpigmente sind, wobei das Beschichtungsmittel
(a) eine oder mehrere funktionelle Gruppen zur Anhaftung oder Anbindung an die Pigmentoberfläche und
(b) mindestens eine aminofunktionelle Gruppe aufweist, wobei die aminofunktionelle Gruppe protonierbar oder positiv geladen ist.

Bevorzugte Weiterbildungen der Elektrotauchlackpigmente sind in den Unteransprüchen 2 bis 10 angegeben.

Die Aufgabe wurde weiterhin gelöst durch Bereitstellung eines Verfahrens zur Herstellung von Elektrotauchlackpigmenten nach einem der Ansprüche 1 bis 10, wobei das Verfahren die folgenden Schritte umfasst:
(a) Beschichten eines Metalleffektpigmentes mit dem in einem Lösemittel gelösten oder dispergierten Beschichtungsmittel mit aminofunktioneller Gruppe, wobei die aminofunktionelle Gruppe protonierbar oder positiv geladen ist,
(b) optional Trocknen der im Schritt (a) mit dem Beschichtungsmittel beschichteten Metalleffektpigmente,
(c) optional Anpasten der in Schritt (b) getrockneten Metalleffektpigmente.

Eine Weiterbildung des erfindungsgemäßen Verfahrens ist im Unteranspruch 12 angegeben.

Die der Erfindung zugrundeliegende Aufgabe wird auch durch die Verwendung von Elektrotauchlackpigmenten nach einem der Ansprüche 1 bis 10 in einem kathodischen Elektrotauchlack oder beim kathodischen Elektrotauchlackieren gelöst.

Des weiteren betrifft die Erfindung einen kathodischen Elektrotauchlack enthaltend Elektrotauchlackpigmente nach einem der Ansprüche 1 bis 10.

Die Metalleffektpigmente können aus Metallen oder Legierungen bestehen, die aus der Gruppe, die aus Aluminium, Kupfer, Zink, Zinn, Messing, Eisen, Titan, Chrom, Nickel, Stahl, Silber und deren Legierungen und Gemischen davon besteht, ausgewählt werden. Bevorzugt sind hierbei Aluminiumpigmente sowie Messingpigmente, wobei Aluminiumpigmente besonders bevorzugt sind.

Die Metalleffektpigmente sind immer plättchenförmiger Natur. Hierunter versteht man Pigmente, bei denen die Längsausdehnung mindestens das Zehnfache, bevorzugt mindestens das Zwanzigfache und besonders bevorzugt mindestens das Fünfzigfach der mittleren Dicke beträgt. Im Sinne der Erfindung werden, wenn Metalleffektpigmente erwähnt werden, immer plättchenförmige Metalleffektpigmente gemeint.

Die in dem erfindungsgemäßen Elektrotauchlack verwendeten Metalleffektpigmente besitzen mittlere Längsausdehnungen, die mittels Lasergranulometrie (Cilas 1064, Fa. Cilas) als Kugeläquivalente ermittelt und als d₅₀-Wert der entsprechenden Größensummendurchgangsverteilung dargestellt werden. Diese d₅₀-Werte betragen 2 bis 100 µm, bevorzugt 4 bis 35 µm und ganz besonders bevorzugt von 5 bis 25 µm.

Es wurde überraschend festgestellt, dass sich sehr große Pigmentteilchen mit einem d₅₀-Wert oberhalb von 100 µm praktisch kaum noch abscheiden lassen. Offenbar sind die Migrations- und Abscheidungseigenschaften bei größeren Teilchen erheblich reduziert. Aus derartig groben Pigmentverteilungen werden nur noch die Fraktionen unterhalb von ca. 100 µm abgeschieden (Feinkornanteil). Damit wird jedoch die Größe und Größenverteilung der abgeschiedenen Teilchen im Vergleich zu den eingesetzten erheblich reduziert. Aus diesem Grunde sind kleinere Teilchen mit einem d₅₀-Wert von < 100 µm bevorzugt. Ab einem d₅₀-Wert von ca. 2 bis 35 µm werden die erfindungsgemäßen Pigmente ohne Probleme in ihrer gesamten Größenverteilung abgeschieden. Zudem ermöglichen Pigmente ab dieser Größe eine Baddauer von mehr als 60 Tagen.

Unterhalb von einem d₅₀-Wert von 4 µm sind die Teilchen zu fein, um einen ansprechenden optischen Effekt zu produzieren. Auch können hier aufgrund der sehr hohen spezifischen Oberfläche der feinen Pigmente gelegentlich Gasungsprobleme im wässrigen Elektrotauchlackmedium auftreten.

Die mittlere Dicke der erfindungsgemäßen Metalleffektpigmente hingegen beträgt bevorzugt 40 bis 5000 nm, besonders bevorzugt 65 bis 800 nm und ganz besonders bevorzugt 250 bis 500 nm.

Elektrotauchlacke sind immer wasserbasierende Systeme. Aus diesem Grunde müssen in einem Elektrotauchlack enthaltene Metalleffektpigmente für die Anwendung in wässrigen Systemen stabilisiert sein. Beispielsweise sind sie mit einer Schutzschicht versehen, um den korrosiven Einfluss des Wassers auf das Metalleffektpigment zu unterbinden. Zudem müssen sie über geeignete Oberflächenladungen verfügen, um im elektrischen Feld eine ausreichende elektrophoretische Beweglichkeit zu besitzen.

Überraschenderweise werden diese Eigenschaften erfüllt, wenn Metalleffektpigmente mit einem Beschichtungsmittel beschichtet sind, wobei das Beschichtungsmittel eine oder mehrere funktionelle Gruppen zur Anhaftung oder Anbindung an die Pigmentoberfläche und mindestens eine protonierbare oder positiv geladene aminofunktionelle Gruppe aufweist.

Unter dem Begriff "Anhaftung" werden im Sinne der Erfindung nicht kovalente Wechselwirkungen verstanden, wie z. B. hydrophobe Wechselwirkungen, Wasserstoffbrückenbindungen, ionische Wechselwirkungen, van-der-Waals-Kräfte etc., die zu einer Immobilisierung des Beschichtungsmittels auf der Pigmentoberfläche führen.

Unter dem Begriff "Anbindung" werden im Sinne der Erfindung kovalente Bindungen verstanden, die zu einer kovalenten Immobilisierung des Beschichtungsmittels auf der Pigmentoberfläche führen.

Es hat sich völlig überraschend gezeigt, dass Metalleffektpigmente bei der kathodischen Tauchlackierung eine hervorragende elektrophoretische Mobilität aufweisen, wenn die Metalleffektpigmente mit einem Beschichtungsmittel versehen sind, das eine aminofunktionelle Gruppe enthält.

Die protonierbare oder positiv geladene aminofunktionelle Gruppe ragt nach Einbringung der beschichteten Metalleffektpigmente in das Elektrotauchlackmedium vorzugsweise in das Elektrotauchlackmedium hinein. Die protonierbare oder positiv geladene aminofunktionelle Gruppe ist vorzugsweise durch einen Spacer von der Metalleffektpigmentoberfläche beabstandet angeordnet. Der Spacer ist dabei ein unter Elektrotauchlackierungsbedingungen nichtreaktives, vorzugsweise organischchemisches, Strukturelement, das die an der Metalleffektpigmentoberfläche anhaftende oder anbindende Gruppe und die protonierbare oder positiv geladene aminofunktionelle Gruppe miteinander verbindet.

Das nicht-reaktive organisch-chemische Strukturelement kann beispielsweise eine lineare oder verzweigte Alkylkette mit 1 bis 20 C-Atomen, vorzugsweise mit 2 bis 10 C-Atomen, weiter bevorzugt mit 3 bis 5 C-Atomen, sein. Optional kann diese lineare oder verzweigte Alkylkette Heteroatome oder -gruppen wie O, S oder NH enthalten.

Weiter bevorzugt handelt es sich bei der protonierbaren oder positiv geladenen aminofunktionellen Gruppe um eine endständige, substituierte oder unsubstituierte, Aminogruppe, d.h. um eine endständig am Spacer angeordnete Aminogruppe, die von der an die Metalleffektpigmentoberfläche anbindende oder anhaftende Gruppe maximal beabstandet ist.

Bei der aminofunktionellen Gruppe handelt es sich vorzugsweise um eine protonierbare Aminogruppe oder um eine postiv geladene Aminogruppe.

Bei der positiv geladenen aminofunktionellen Gruppe handelt es sich gemäß einer Variante der Erfindung vorzugsweise um eine quartäre Ammoniumverbindung. Solche quartären Ammoniumverbindungen werden vorzugsweise durch Alkylierung von Aminverbindungen erhalten.

Gemäß einer weiteren bevorzugten Verbindung kann der Ladungszustand durch Absenken des pH-Wertes gesteuert werden, indem durch Säurezugabe die aminofunktionellen Gruppe(n) protoniert werden.

Gemäß einer Variante der vorliegenden Erfindung handelt es sich bei der aminofunktionellen Gruppe um eine an dem Spacer angeordnete -NH₂-Gruppe.

Gemäß einer weiteren Variante handelt es sich bei der aminofunktionellen Gruppe um eine an dem Spacer angeordnete -NR¹R²-Gruppe,
wobei R¹ und R² gleich oder voneinander verschieden sein können und unabhängig voneinander Wasserstoff, Alkyl mit 1 bis 20 C-Atomen, vorzugsweise mit 2 bis 10 C-Atomen, weiter bevorzugt mit 3 bis 5 C-Atomen sein können, oder
R¹ und R² miteinander verbunden und zusammen mit dem Stickstoffatom einen Heterozyklus, der vorzugsweise 4 oder 5 C-Atome enthält, bilden können.

Gemäß einer weiteren Variante handelt es sich bei der aminofunktionellen Gruppe um eine an dem Spacer angeordnete -NR¹R²R³-Gruppe,
wobei R¹, R² und R³ gleicht oder voneinander verschieden sein können und unabhängig voneinander Wasserstoff, Alkyl mit 1 bis 20 C-Atomen, vorzugsweise mit 2 bis 10 C-Atomen, weiter bevorzugt mit 3 bis 5 C-Atomen sein können.

Gemäß einer bevorzugten Weiterbildung der Erfindung sind die Metalleffektpigmente mit einer anorganischen und/oder organischen Beschichtung, ggf. in Form einer anorganisch/ organischen Mischschicht, versehen, mit Kunstharz beschichtet oder überzogen oder oberflächlich korrosionsinhibierend oxidiert (Produktreihe ALOXAL^{®} der Firma Eckart GmbH & Co. KG) oder eingefärbte Metalleffektpigmente (beispielsweise Produktreihe ALUCOLOR^{®} der Firma Eckart GmbH & Co. KG) und mit mindestens einem Beschichtungsmittel behandelt, welches für Elektrotauchlacke geeignete Bindemittelfunktionalitäten enthält.

Die mit Kunstharzen beschichteten Metalleffektpigmente enthalten eine Beschichtung aus Polymeren. Diese Polymere werden ausgehend von Monomeren auf die Metalleffektpigmente polymerisiert. Die Kunstharze umfassen Polyacrylate, Polymethacrylate, Polyester und/oder Polyurethane.

Bei einer bevorzugten Ausführungsform wird das beschichtete Metalleffektpigment mit mindestens einem Polymethacrylat und/oder Polyacrylat beschichtet.

Besonders bevorzugt werden Metalleffektpigmente verwendet, die gemäß der Lehre der EP 0 477 433 A1, die hiermit unter Bezugnahme aufgenommen ist, hergestellt wurden. Derartige Pigmente enthalten vorzugsweise zwischen dem Metalleffektpigment und der Kunstharzbeschichtung ein organofunktionelles Silan, welches als Haftvermittler dient. Besonders bevorzugt sind hierbei Beschichtungen aus, vorzugsweise mehrfach vernetzten Polyacrylaten und/oder Polymethacrylaten. Derartige Überzüge stellen bereits einen gewissen, wenn auch nicht völlig zuverlässigen korrosionsinhibierenden Schutz gegenüber dem wässrigen Medium von Elektrotauchlacken dar. Ähnliche Pigmente werden in der DE 36 30 356 C2 beschrieben, wobei hier zwischen dem Metalleffektpigment und der Kunstharzbeschichtung eine ethylenisch ungesättigte Carbonsäure und/oder Phosphorsäure-Mono- oder Diester als Haftvermittler angeordnet ist/sind.

Beispiele für derartige Vernetzer, die bei der vorliegenden Erfindung bevorzugt verwendet werden können, sind: Tetraethylenglycoldiacrylat (TEGDA), Triethylenglycoldiacrylat (TIEGDA), Polyethylenglycol-400-diacrylat (PEG400DA), 2,2'-Bis(4-acryloxyethoxyphenyl)-propan, Ethylenglycoldimethacrylat (EGDMA), Diethylenglycoldimethacrylat (DEGDMA), Triethylenglycoldimethacrylat (TRGDMA), Tetraethylenglycoldi-methacrylat (TEGDMA), Butyldiglycolmethacrylat (BDGMA), Trimethylolpropantri-methacrylat (TMPTMA),1,3-Butandioldimethacrylat (1,3-BDDMA), 1,4-Butandioldi-methacrylat (1,4-BDDMA), 1,6-Hexandioldimethacrylat (1,6-HDMA), 1,6-Hexan-dioldiacrylat (1,6-HDDA), 1,12-Dodecandioldimethacrylat (1,12-DDDMA), Neopentyl-glycoldimethacrylat (NPGDMA),
Besonders bevorzugt ist Trimethylolpropantrimethacrylat (TMPTMA).

Diese Verbindungen sind kommerziell erhältlich bei Elf Atochem Deutschland GmbH, D-40474 Düsseldorf, Deutschland oder Rohm & Haas, In der Kron 4, D-60489 Frankfurt/ Main, Deutschland.

Die Dicke der korrosionsinhibierenden Beschichtung, vorzugsweise organischer Beschichtung oder Kunstharzbeschichtung, beträgt vorzugsweise 2 bis 50 nm, weiter bevorzugt 4 bis 30 nm und besonders bevorzugt 5 bis 20 nm. Der Anteil an organischer Beschichtung oder Kunstharzbeschichtung ist, jeweils bezogen auf das Gewicht des unbeschichteten Metalleffektpigments, im einzelnen von der Größe der Metalleffektpigmente abhängig und beträgt vorzugsweise 1 bis 25 Gew.-%, weiter bevorzugt 2 bis 15 Gew.-% und besonders bevorzugt 2,5 bis 10 Gew.-%.

Das Beschichtungsmittel wird nach der Aufbringung der organischen Beschichtung oder der Kunstharzschicht und/oder einer anderen korrosionsinhibierenden Schicht, beispielsweise einer anorganischen Beschichtung, wie einer Metalloxid-haltigen oder Metalloxidschicht, auf die Metalleffektpigmente aufgebracht.

Die korrosionsinhibierende Beschichtung kann beispielsweise im wesentlichen Metalloxid, insbesondere Siliciumdioxid, enthalten oder daraus bestehen. Eine Metalloxidschicht kann unter Verwendung verschiedener dem Fachmann bekannter Verfahren aufgebracht werden. Beispielsweise kann eine Siliciumdioxidschicht mittels Sol-Gel-Verfahren unter Hydrolyse von Tetraalkoxysilanen aufgebracht werden, wobei die Alkoxygruppe dabei Methoxy, Ethoxy, Propoxy oder Butoxy sein kann. Es ist aber auch möglich, eine SiO₂-Beschichtung unter Verwendung von Wasserglas auf die Metalleffektpigmentoberfläche aufzubringen.

Die korrosionsinhibierende Beschichtung kann auch eine oberflächliche Oxidschicht sein. Beispielsweise können Aluminiumeffektpigmente mit einer dichten oberflächlichen Oxidschicht versehen werden, die korrosionsinhibierend gegenüber wässrigen Medien ist.

Gemäß einer bevorzugten Ausführungsform kann die Oxidschicht zusätzlich Farbpigmente enthalten. Die Farbpigmente können während der Aufbringung der Metalloxidschicht, insbesondere Siliciumdioxidschicht, oder während der oberflächlichen Oxidation der Oberfläche der Metalloxidschicht eingebracht werden.

Die korrosionsinhibierende Beschichtung, beispielsweise Kunstharzschicht, kann die Pigmente vollkommen umschließen, sie kann jedoch auch nicht ganz geschlossen vorliegen oder Risse aufweisen. Durch Verwendung des bei der vorliegenden Erfindung verwendeten Beschichtungsmittels mit protonierbarer oder positiv geladener aminofunktioneller Gruppe und mit funktionellen Gruppen zur Anhaftung und/oder Anbindung an die Pigmentoberfläche werden mögliche Korrosionsstellen, die durch derartige Risse oder durch eine nicht vollständige korrosionsinhibierende Beschichtung an dem Metalleffektpigment hervorgerufen werden können, belegt.

Das bei der vorliegenden Erfindung verwendete Beschichtungsmittel vermag, insbesondere wenn es an die metallische Pigmentoberfläche anbindet, in derartige Lücken oder Risse in der korrosionsinhibierenden Beschichtung, vorzugsweise Kunstharzbeschichtung, einzudringen und somit die erforderliche Korrosionsstabilität zu bewirken.

Obgleich sich überraschend gezeigt hat, dass das bei der vorliegenden Erfindung verwendete Beschichtungsmittel auch bei Metalleffektpigmenten korrosionsinhibierende Eigenschaften aufweist, wird dieses Beschichtungsmittel primär verwendet, um die Metalleffektpigmente kathodisch abscheidbar zu machen. Durch das Beschichtungsmittel mit protonierbarer oder positiv geladener aminofunktioneller Gruppe sind die Metalleffektpigmente im Elektrotauchlackbad elektrophoretisch mobil, d.h. sie wandern in Richtung des kathodisch geschalteten zu lackierenden Gegenstandes.

Lediglich mit Kunstharz oder anderen korrosionsinhibierenden Beschichtungen beschichtete Metalleffektpigmente, die nicht mit dem bei der vorliegenden Erfindung verwendeten Beschichtungsmittel mit aminofunktioneller Gruppe behandelt sind, können bei der kathodischen Elektrotauchlackierung nicht wirksam bzw. nur ungenügend kathodisch abgeschieden werden.

Bei einer Elektrotauchlackierung werden einem Elektrotauchlack zugesetzte konventionelle Farbpigmente auf dem Werkstück durch einen eher zufälligen Prozess abgeschieden. Der Elektrotauchlack wird hier stets während der Abscheidung heftig gerührt. Dadurch findet im wesentlichen der Stofftransport zum Werkstück statt (Konvektion). Erst innerhalb der sich ausbildenden Nernstschen Diffusionsschicht erfolgt eine elektrophoretische Wanderung der geladenen Bindemittelteilchen im elektrischen Feld. Die Konzentration der Farbpigmente im Abscheidebad ist sehr hoch (ca. 10 Gew.-%). Durch das sich abscheidende Bindemittel werden die Farbpigmente mitgerissen. Eine elektrophoretische Wanderung der Farbpigmente im elektrischen Feld erfolgt nicht.

Metalleffektpigmente sind *per se* nicht in Elektrotauchlacken einsetzbar. Selbst wenn sie durch eine geeignete Schutzschicht, wie beispielsweise ein Metalloxid oder ein Kunstharz, korrosionsstabil gegenüber dem wässrigen Medium des Elektrotauchlackes sind, werden sie entweder gar nicht abgeschieden oder aber nach einer anfänglichen Abscheidung nach wenigen Stunden bis Tagen nicht mehr abgeschieden, was alsmangelnde Badstabilität bezeichnet wird.

Es wurde nun überraschenderweise gefunden, dass die erfindungsgemäßen Metalleffektpigmente sich zuverlässig und über längere Zeiten bei der kathodischen Elektrotauchlackierung abscheiden lassen und der Elektrotauchlack eine Badstabilität von mehr als 60 Tagen aufweist. Die in dem kathodischen Elektrotauchlack enthaltenen erfindungsgemäßen Metalleffektpigmente werden mithin auch noch nach 60 Tagen, bevorzugt nach 90 Tagen, zuverlässig auf dem Werkstück abgeschieden. Ferner weisen sie eine hinreichende Korrosionsstabilität auf, so dass im Elektrotauchlack innerhalb dieser Zeit keine nennenswerte Gasung (im Fall von Aluminium- oder Eisenpigmente) oder Freisetzung von Metallionen (im Fall von Messingpigmenten) auftritt.

Es hat sich gezeigt, dass das Beschichtungsmittel dabei eine oder mehrere aminofunktionelle Gruppen aufweisen muss. Diese werden im Elektrotauchlack zumindest teilweise protoniert. Diese protonierten Aminogruppen verleihen dem erfindungsgemäßen Elektrotauchlackpigment vermutlich genügend positive Oberflächenladungen, um im überwiegend wässrigen Medium des Elektrotauchlackes gut dispergiert zu werden. Ferner werden die erfindungsgemäßen Metalleffektpigmente vermutlich derart an ihrer Oberfläche positiv aufgeladen, das eine Wanderung im angelegten elektrischen Feld innerhalb der Nernst schen Diffusionsschicht zur Kathode hin ermöglicht wird. Es wird vermutet, dass auf diese Weise die Oberfläche der erfindungsgemäßen Metalleffektpigmente chemisch den Bindemitteln des kathodischen Elektrotauchlackes angepasst wird. Dies ermöglicht, dass die Metalleffektpigmente im elektrischen Feld einerseits elektrophoretisch wandern können und andererseits am Abscheidemechanismus der Elektrotauchlacke an der Kathode teilnehmen.

Des weiteren enthalten die Beschichtungsmittel funktionelle Gruppen, die eine Anhaftung und/oder Anbindung an die Oberfläche des Metalleffektpigments bzw. dessen stabilisierende Beschichtung bewirken oder bewirken können. Die Pigmentoberfläche kann dabei direkt die Metalleffektpigmentoberfläche sein. Die Pigmentoberfläche kann jedoch auch die mit einer anorganischen oder organischen Beschichtung, bevorzugt mit Kunstharz beschichtete Metalleffektpigmentoberfläche sein. Auf diese Weise können die Beschichtungsmittel zuverlässig und in ausreichendem Maße auf den Metalleffektpigmenten verankert werden.

Diese funktionellen Gruppen zur Anhaftung oder Anbindung an die beschichtete oder unbeschichtete Metalleffektpigmentoberfläche sind beispielsweise Phosphonsäureester-, Phosphorsäureester-, Carboxylat-, Metallsäureester-, Alkoxysilyl-, Silanol-, Sulfonat-, Hydroxyl-, Polyol-Gruppen und deren Mischungen. Besonders bevorzugt sind die Alkoxysilyl- und/oder Silanolgruppen geeigneter organofunktioneller Silane.

Derart funktionalisierte Beschichtungsmittel tragen zur Korrosionsstabilität der Metalleffektpigmente im wässrigen Elektrotauchlack bei. So kann beispielsweise bei Eisen- oder Aluminiumpigmenten überraschenderweise die Gasung, d.h. die Wasserstoffentwicklung, wirksam unterdrückt werden.

Es hat sich als wesentlich herausgestellt, dass das Beschichtungsmittel zwingend über wenigstens eine protonierbare oder positiv geladene aminofunktionelle Gruppe und über wenigstens eine funktionelle Gruppe zur Anhaftung oder Anbindung an die Pigmentoberfläche verfügen muss. Beispielsweise sind aliphatische Amine, denen die wenigstens eine funktionelle Gruppe zur Anhaftung oder Anbindung an die Pigmentoberfläche fehlt, nicht geeignet, um in einem kathodischen Elektrotauchlacksystem wirksam kathodisch abscheidbare Metalleffektpigmente bereitzustellen.

Bei den erfindungsgemäßen Elektrotauchlackpigmenten werden bevorzugt als Beschichtungsmittel Amine eingesetzt, die zu Ammoniumsalzen protoniert werden können.

Besonders bevorzugte Beschichtungsmittel umfassen aminofunktionelle Silane der Formel

R¹ₐR²_{b}Si(OR')_{(4-a-b)} (I)

wobei R¹ eine organofunktionelle Gruppe, die mindestens eine aminofunktionelle Gruppe enthält, ist, R² eine weitere organofunktionelle Gruppe, die keine aminofunktionelle Gruppe enthält, ist, R' unabhängig voneinander H oder Alkylgruppe mit 1 bis 6 C-Atomen, bevorzugt mit 1 bis 3 C-Atomen, sind, und wobei.
a und b ganze Zahlen sind, mit der Maßgabe, dass a 1 bis 3 und b 0 bis 3 sein kann, wobei a und b zusammengenommen maximal 3 sind.
Bevorzugt ist R' Ethyl oder Methyl.
R² ist bevorzugt substituiertes oder unsubstituiertes Alkyl mit vorzugsweise 1 bis 6 C-Atomen, beispielsweise Methyl oder Ethyl. Weiterhin kann R² mit funktionellen Gruppen wie beispielsweise Acrylat-, Methacrylat-, Vinyl-, Isocyanato-, Hydroxy-, Carboxy-, Thiol-, Cyano-, Epoxy oder Ureidogruppen substituiert sein.
Gemäß einer bevorzugten Ausführungsform ist b = 0. Gemäß einer besonders bevorzugten Ausführungsform ist a = 1 und b = 0.

Die mindestens eine protonierbare oder positiv geladene aminofunktionelle Gruppe, die R¹ enthält, ist vorzugsweise ein primäres, sekundäres, tertiäres Amin oder eine Ammoniumgruppe. Bevorzugt ist die aminofunktionelle Gruppe wie obenstehend definiert.

Derartige Silane sind kommerziell verfügbar. Beispielsweise sind dies viele Vertreter der von der Fa. Degussa, Rheinfelden, Deutschland hergestellten und unter dem Handelsnamen Dynasylan^{®} vertriebenen Produkte bzw. die von der Firma OSi Specialties produzierten Silquest^{®}-Silane oder die von der Firma Wacker, Burghausen, Deutschland produzierten GENOSIL^{®}-Silane.

Beispiele hierfür sind N-Benzyl-N-aminoethyl-3-aminopropyltrimethoxysilan (Dynasylan 1161), N-Vinylbenzyl-N-(2-aminoethyl)-3-aminopropylpolysiloxan (Dynasylan 1172), N-Vinylbenzyl-N-(aminoethyl)-3-aminopropylpolysiloxan (Dynasylan 1175), Aminopropyltrimethoxysilan (Dynasylan AMMO; Silquest A-1110), Aminopropyltriethoxysilan (Dynasylan AMEO) oder N-(2-Aminoethyl)-3-aminopropyltrimethoxysilan (Dynasylan DAMO, Silquest A-1120) oder N-(2-Aminoethyl)-3-aminopropyltriethoxysilan, Triamino-funktionelles Trimethoxysilan (Silquest A-1130), bis-(gamma-Trimethoxysilylpropyl)amin (Silquest A-1170), N-ethylgamma-aminoisobutyltrimethoxysilan (Silquest A-Link 15), N-Phenyl-gammaaminopropyltrimethoxysilan (Silquest Y-9669), 4-Amino-3,3-dimethylbutyl-trimethoxysilan (Silquest Y-11637), N-Cyclohexylaminomethylmethyl-diethoxysilan (GENIOSIL XL 924), (N-Cyclohexylaminomethyl)triethoxysilan (GENIOSIL XL 926), (N-Phenylaminomethyl)trimethoxysilan (GENIOSIL XL 973), Aminopropyldimethylethoxysilan, Aminopropylmethyldiethoxysilan, N-Methylaminopropyldimethylethoxysilan, N-Methylaminopropylmethyldiethoxysilan, N-Methylaminopropyltriethoxysilan, N-Ethylaminopropyldimethylethoxysilan, N-Ethylaminopropylmethyldiethoxysilan, N-Ethylaminopropyltriethoxysilan, N-Cyclohexylaminopropyltriethoxysilan, N-Cyclohexylaminopropylmethyldiethoxysilan, N-Phenylaminotriethoxysilan, N-Phenylaminopropyltriethoxysilan, N,N-Dimethyl-aminopropyldimethylethoxysilan, N,N-Dimethylaminopropylmethyldiethoxysilan, N,N-Dimethylaminopropyltriethoxysilan, N,N-Diethylaminopropyldimethylethoxysilan, N,N-Diethylaminopropyl-methyldiethoxysilan, N,N-Diethylamino-propyltriethoxysilan, N,N-Dipropylaminopropyl-dimethylethoxysilan, N,N-Dipropylaminopropylmethyltriethoxysilan, N,N-Dipropyl-aminopropyltriethoxysilan, N,N-Methylethylaminopropyldimethylethoxysilan, N,N-Methylethylaminopropylmethyldiethoxysilan, N,N-Methylethylaminopropyl-triethoxysilan, Anilinopropyldimethylethoxysilan, Anilinopropylmethyldiethoxysilan,
Anilinopropyltriethoxysilan,Morpholinopropyldimethylethoxysilan,
Morpholinopropylmethyldiethoxysilan, Morpholinopropyltriethoxysilan, N,N,N-Trimethylammoniumpropyldimethylethoxysilan, N,N,N-Trimethylammoniumpropylmethyldiethoxysilan, N,N,N-Trimethylammoniumpropyltriethoxysilan, N,N,N-Triethylammoniumpropyldimethylethoxysilan, N,N,N-Triethylammoniumpropylmethyldiethoxysilan, N,N,N-Triethylammoniumpropyltriethoxysilan, Trimethoxysilylpropyl- substituiertes Polyethylenimin, Dimethoxymethylsilylpropylsubstituiertes Polyethylenimin und deren Mischungen.

Die Beschichtungsmittel mit protonierbarer oder positiv geladener aminofunktioneller Gruppe werden vorzugsweise in Mengen von 1 bis 100 Gew.-%, bezogen auf das Gewicht des unbeschichteten Metalleffektpigmentes, eingesetzt. Unterhalb von 1 Gew.-% kann die Wirkung zu gering sein, so dass die Metalleffektpigmente insbesondere nach mehr als 60 Tagen Baddauer nicht mehr zuverlässig abgeschieden werden. Oberhalb von 100 Gew.-% wird unnötig viel Beschichtungsmittel mit aminofunktioneller Gruppe verwendet.

Des weiteren kann überschüssiges Beschichtungsmittel mit aminofunktioneller Gruppe die Eigenschaften des Elektrotauchlackes negativ beeinflussen. Bevorzugt wird das bzw. werden die Beschichtungsmittel mit aminofunktioneller Gruppe in Mengen von 5 bis 70 Gew.-% und besonders bevorzugt von 7 bis 50 Gew.-%, weiter bevorzugt von 10 bis 30 Gew.-%, jeweils bezogen auf das Gewicht des mit Beschichtungsmittel unbeschichteten Metalleffektpigments, eingesetzt. Diese Angaben beziehen sich jeweils auf das Beschichtungsmittel selbst und nicht auf möglicherweise vorhandenes Lösemittel, in dem das Beschichtungsmittel mit aminofunktioneller Gruppe in seiner kommerziell erhältlichen Darreichungsform angeboten wird.

Das Beschichtungsmittel kann, muss jedoch nicht, die Metalleffektpigmente vollständig umhüllen.

Ein Verfahren zur Bereitstellung der erfindungsgemäßen Metalleffektpigmente umfasst die Belegung des Metalleffektpigmentes mit dem Beschichtungsmittel mit aminofunktioneller Gruppe. Es umfasst folgende Schritte:
(a) Beschichten eines Metalleffektpigmentes mit dem in einem Lösemittel gelösten oder dispergierten Beschichtungsmittel mit aminofunktioneller Gruppe, wobei die aminofunktionelle Gruppe protonierbar oder positiv geladen ist,
(b) optional Trocknen der im Schritt (a) mit dem Beschichtungsmittel beschichteten Metalleffektpigmente,
(c) optional Anpasten der in Schritt (b) getrockneten Metalleffektpigmente.

Die Belegung kann auf vielerlei Wegen vonstatten gehen. Das Metalleffektpigment kann beispielsweise in einem Mischer oder Kneter in Form einer Paste, beispielsweise in einem organischen Lösemittel oder in einem Gemisch aus organischem Lösemittel und Wasser, vorgelegt werden. Anschließend gibt man das Beschichtungsmittel mit protonierbarer oder positiv geladener aminofunktioneller Gruppe hinzu und lässt dieses vorzugsweise für mindestens 5 min auf das Metalleffektpigment einwirken. Das Beschichtungsmittel wird bevorzugt in Form einer Lösung oder Dispersion zugegeben. Hierbei kann es sich um eine wässrige Lösung oder um eine überwiegend organische Lösung handeln.

Weiterhin kann das Metalleffektpigment zunächst in einem Lösungsmittel dispergiert werden. Unter Rühren gibt man anschließend das Beschichtungsmittel hinzu. Hierbei sollte bevorzugt das Lösungsmittel, in dem das Beschichtungsmittel gelöst ist, mischbar sein mit jenem, in dem das Metalleffektpigment dispergiert ist. Bei Bedarf können höhere Temperaturen, bis zum Siedepunkt des Lösemittels oder des Lösemittelgemisches, eingestellt werden, meist reicht jedoch Raumtemperatur aus, um das Beschichtungsmittel wirksam auf das Metalleffektpigment aufzubringen.

Danach wird das Pigment vom Lösungsmittel befreit und entweder zum Pulver getrocknet und/oder ggf. in einem anderen Lösungsmittel angepastet. Als Lösemittel kommen Wasser, Alkohole wie beispielsweise Ethanol, Isopropanol, n-Butanol oder Glycole wie beispielsweise Butylglycol in Frage. Das Lösemittel sollte mit Wasser mischbar sein. Das erfindungsgemäße Pigment kommt als Paste oder Pulver in den Handel. Die Pasten haben einen nicht flüchtigen Anteil von 30 bis 70 Gew.-%, bezogen auf das Gewicht der gesamten Paste. Bevorzugt besitzt die Paste einen nicht flüchtigen Anteil von 40 bis 60 Gew.-% und besonders bevorzugt von 45 bis 55 Gew.-%.

Die Pastenform ist eine bevorzugte staubfreie und homogene Präparationsform der erfindungsgemäßen Elektrotauchlackpigmente. Die erfindungsgemäßen Elektrotauchlackpigmente können in staubfreier und homogener Form auch als Pellets, Würstchen, Tabletten, Briketts oder Granulat vorliegen. Die vorgenannten Präparationsformen können durch Pelletieren, Extrudieren, Tablettieren, Brikettieren bzw. Granulieren in dem Fachmann bekannter Weise hergestellt werden. In diesen kompaktierten Präparationsformen ist das Lösemittel weitgehend entfernt worden. Der restliche Lösemittelgehalt liegt üblicherweise in einem Bereich von weniger als 15 Gew.-%, bevorzugt weniger als 10 Gew.-%, weiter bevorzugt zwischen 0,5 und 5 Gew.-%, jeweils bezogen auf das Gewicht der Pigmentpräparation.

Das Beschichtungsmittel mit protonierbarer oder positiv geladener aminofunktioneller Gruppe kann vor dem Beschichten des Metalleffektpigmentes in einer neutralisierten oder teilneutralisierten Form vorliegen. Es kann jedoch auch nach dem Beschichtungsvorgang neutralisiert werden. Die Neutralisierung/ Teilneutralisierung kann auch erst mit der pH-Einstellung des Elektrotauchlackes erfolgen.

Zur Neutralisation der basischen Funktionalitäten eigenen sich übliche Säuren. Beispiele hierfür sind: Ameisensäure, Essigsäure, Salzsäure, Schwefelsäure oder Salpetersäure oder Gemische dieser Säuren. Es sollte soviel Säure verwendet werden, dass mindestens 25 %, bevorzugt 40 % der basischen Gruppen des mit dem Beschichtungsmittel belegten Metalleffektpigmentes in neutraler Form vorliegen. Hierbei werden als basische Gruppen auch funktionelle Gruppen, die vom Metalleffektpigment selbst stammen können, gezählt.

Es können die Schritte (a) und (b) des erfindungsgemäßen Verfahrens auch zu einem Schritt zusammengefasst werden, indem das Beschichtungsmittel als Lösung oder Dispersion auf in einem Gasstrom bewegte Metalleffektpigmente aufgebracht wird.

Bei einer besonderen Ausführungsform können die erfindungsgemäßen Elektrotauchlackpigmente durch das Verfahren mit den folgenden Schritten hergestellt werden.
a) Herstellen einer Lösung oder Dispersion des Beschichtungsmittels mit protonierbarer oder positiv geladener aminofunktioneller Gruppe in einem organischen Lösemittel,
b) Beschichten des Metalleffektpigmentes mit dem Beschichtungsmittel durch
   i) Dispergieren des Metalleffektpigmentes in der Lösung oder Dispersion von a) und anschließendes Versprühen
      oder
   ii) Versprühen der Lösung oder Dispersion aus a) auf in einem Gasstrom verwirbelte Metalleffektpigmente,
c) optional Trocknen der mit Bindemittel beschichteten Metalleffektpigmente in einem bewegten Gasstrom,
d) optional Anpasten des Pigmentes in Wasser und/oder einem organischem Lösemittel,
e) optional Neutralisieren mit einer Säure.

Das Neutralisieren und Anpasten der Pigmente kann dabei wie oben beschrieben erfolgen.

Bevorzugt werden die Schritte b) und c) in einem Verfahrensschritt zusammengefasst, indem das Versprühen und Trocknen in einem Sprühtrockner durchgeführt wird.

Dabei werden bevorzugt leicht flüchtige Lösemittel wie beispielsweise Aceton und/oder Ethylacetat verwendet.

Die erfindungsgemäßen Elektrotauchlackpigmente werden in kathodischen Elektrotauchlacken oder beim kathodischen Elektrotauchlackieren verwendet.

Gegenstand der Erfindung ist ferner ein kathodischer Elektrotauchlack enthaltend die erfindungsgemäßen Elektrotauchlackpigmente, ein Bindemittel und Wasser. Bei den Bindemitteln handelt es sich beispielsweise um primäre oder tertiäre Aminogruppen enthaltende Polymerisations-, Polyadditions- oder Polykondensationsprodukte wie Amino-Epoxidharze, Amino-Poly(meth)acrylatharze oder Amino-Polyurethanharze. Ferner können im Elektrotauchlack weitere übliche Zusatzstoffen wie Füllstoffe, Additive, organische und/oder anorganische Farbpigmente, etc. enthalten sein. Mittels Säuren werden die Aminogruppen der Bindemittel sowie bevorzugt die Aminogruppen des Beschichtungsmittels der erfindungsgemäßen Elektrotauchlackpigmente zumindest teilweise protoniert. Dieses bewirkt, dass sich die Bindemittel sowie die erfindungsgemäßen Elektrotauchlackpigmente im angelegten elektrischen Feld zur Kathode hin bewegen und am Abscheidemechanismus der kathodischen Elektrotauchlackierung teilnehmen. Die derart erhaltenen Überzüge weisen einen attraktiven, bisher im kathodischen Elektrotauchlack nicht bekannten Metalleffekt auf und sind außerordentlich abriebsstabil.

Die erfindungsgemäßen Elektrotauchlackpigmente können optional auch schon nach der Beschichtung mit Beschichtungsmittel neutralisiert werden.

Die folgenden Beispiele erläutern die Erfindung näher, ohne sie jedoch einzuschränken.

### Erfindungsgemäßes Beispiel 1:

46,5 g PCA 9155 (mit organischen Polymeren beschichtetes Aluminiumpigment mit D₅₀ = 18 µm; Fa. Eckart GmbH & Co. KG, Fürth, Deutschland) werden mit einer Lösung von 7 g Dynasylan 1161 (N-Benzyl-N-aminoethyl-3-aminopropyltrimethoxysilan der Firma Degussa, Deutschland) in 46,5 g Butylglycol zu einer homogenen Pigmentpaste vermischt.

### Erfindungsgemäßes Beispiel 2:

46,5 g PCA 9155 (mit organischen Polymeren beschichtetes Aluminiumpigment mit D₅₀ = 18 µm; Fa. Eckart GmbH & Co. KG, Fürth, Deutschland) werden mit einer Lösung von 7 g Dynasylan 1172 (N-Vinylbenzyl-N-(2-aminoethyl)-3-aminopropylpolysiloxan der Firma Degussa, Deutschland) in 46,5 g Butylglycol zu einer homogenen Pigmentpaste vermischt.
Die Paste wird vorsichtig im Vakuumtrockenschrank bei ca. 60°C bis zum Pulver getrocknet.

### Erfindungsgemäßes Beispiel 3:

46,5 g PCA 9155 (mit organischen Polymeren beschichtetes Aluminiumpigment mit D₅₀ = 18 µm; Fa. Eckart GmbH & Co. KG, Fürth, Deutschland) werden mit einer Lösung von 7 g Dynasylan 1175 (N-Vinylbenzyl-N-(aminoethyl)-3-aminopropylpolysiloxan der Firma Degussa, Deutschland) in 46,5 g Butylglycol zu einer homogenen Pigmentpaste vermischt.

### Erfindungsgemäßes Beispiel 4:

Die Herstellung erfolgt wie in Beispiel 3, jedoch mit einem Aluminiumeffektpigment größerer Teilchengröße D₅₀ = 32 µm, PCA 214 (Fa. Eckart GmbH & Co. KG).

### Herstellung der Elektrotauchlacke und deren Abprüfung:

27 g der Pasten aus den Beispielen 1, 3 oder 4 werden mit 27 g Butylglycol versetzt. 15 g des Pulvers aus Beispiel 2 wird mit 39 g Butylglycol versetzt. 10 g KTL-Bindemittel VEK 40871-02 (80 Gew.-%iges Epoxidharz der Firma Cytech, Österreich) sowie 1,5 g Netzmittel (Fa. FreiLacke, Bräunlingen, Deutschland), 465 g KTL-Bindemittel VEK 40871-0-03 (34,5 Gew.-%iges Epoxidharz der Firma Cytech, Österreich) sowie 662 g Wasser werden zugegeben.

Die nach dieser Rezeptur hergestellten Tauchlacke für die kathodische Tauchlackierung zeichnen sich durch eine Viskosität von 9 ± 1 Sekunden, gemessen bei einer Temperatur von 20°C im DIN 4 Auslaufbecher, aus. Die Elektrotauchlacke besitzen einen Festkörpergehalt von 13 bis 17 Gew.-% bezogen auf das Gewicht des gesamten Elektrotauchlackes. Der Anteil der Aluminiumpigmente beträgt ca. 1 Gew.-%. Der gemessene pH-Wert der Elektrotauchlackbäder liegt bei 25°C bei einem pH-Wert von etwa 5,5 bis 6,5.

### Vergleichsbeispiel 1:

PCA 9155 (Fa. Eckart GmbH & Co. KG), ein mit Kunstharz beschichtetes Aluminiumeffektpigment mittlerer Teilchengröße D₅₀ = 18 µm in Pastenform (Festkörper 50 Gew.-%) wird ohne weitere Beschichtung in dem Elektrotauchlack eingesetzt. Im Gegensatz zum erfindungsgemäßen Beispiel 1 werden hier 7 g Beschichtungsmittel Dynasylan 1161 erst bei der Zugabe des handelsüblichen kathodischen Tauchlacks (Fa. Frei Lacke) in das Elektrotauchbad eingetragen.

### Vergleichsbeispiel 2:

PCA 9155 (Fa. Eckart GmbH & Co. KG), ein mit Kunstharz beschichtetes Aluminiumeffektpigment mittlerer Teilchengröße D₅₀ = 18 µm in Pastenform (Festkörper 50 Gew.-%) ohne weitere Beschichtung.
Hier wird dem Tauchlack kein weiteres Additiv (Beschichtungsmittel) zugegeben.

Der elektrochemische Abscheidevorgang erfolgt in einem elektrisch leitenden Gefäß, einem sogenannten Tank, welches aus einem elektrisch leitfähigen Material besteht und im Stromkreis als Anode geschaltet wird.Das zu beschichtende Werkstück, im erfindungsgemäßen Beispiel ein Blech der Abmessungen 7,5 cm x 15,5 cm, wird als Kathode geschaltet und zu 2/3 seiner Länge in das Elektrotauchlackbad eingehängt.

Um eine Sedimentation sowie die Bildung von Toträumen zu verhindern, wird der Elektrotauchlack mit einer mittleren Strömungsgeschwindigkeit von ca. 0,1 m/s bewegt. Anschließend wird eine Spannung von 100 V über einen Zeitraum von 120 Sekunden angelegt. Die Temperatur desElektrotauchlackbades beträgt 30°C. Das so beschichtete Werkstück wird anschließend gründlich mit destilliertem Wasser abgespült, um Reste von nicht koaguliertem Harz zu beseitigen. Dem Werkstück wird sodann ein Zeitraum von 10 Minuten zum Ablüften gewährt. Anschließend erfolgt die Vernetzung und Einbrennung des Elektrotauchlacks für 20 Minuten bei 170°C. Die so erzielte Lackschichtdicke beträgt 30 ± 2 µm.

Die mit den Pigmenten aus den erfindungsgemäßen Beispielen 1 bis 4 hergestellten kathodischen Elektrotauchlacke weisen eine äußerst hohe Lager- und Abscheidestabilität in bezug auf die darin enthaltenen Aluminiumeffektpigmente auf. Dies ist aus Tabelle 1 ersichtlich. Die Lacke wurden bei Raumtemperatur gelagert und in einem Zeitintervall von 7 Tagen wurden Bleche, wie vorstehend beschrieben, elektrotauchlackiert. Nach 60 Tagen wurden diese Tests abgebrochen.

Weiterhin wurden Proben der erfindungsgemäßen Beispiele 1 bis 4 für 30 Tage bei 40°C gelagert. Anschließend wurden sie wie oben beschrieben in einen Elektrotauchlack eingearbeitet und Bleche elektrotauchlackiert. Hinsichtlich der optischen Eigenschaften dieser Applikationen wurde kein Unterschied zu Applikationen mit frisch hergestellten Proben gefunden.

Mit den Elektrotauchlacken, die unter Verwendung der Pigmente aus den erfindungsgemäßen Beispielen 1 bis 4 sowie den Vergleichsbeispielen 1 und 2 hergestellt wurden, wurden Gasungstests durchgeführt. Dafür wurden 250 g der Elektrotauchlacke in eine Gasflasche mit Doppelkammerrohraufsatz bei 40 °C temperiert und die entwickelte Gasmenge (H₂, welches durch die Reaktion der Aluminiumeffektpigmente mit Wasser entsteht) gemessen. Der Test gilt als bestanden, wenn nach 30 Tagen nicht mehr als 20 ml Wasserstoff entwickelt wurden.
Die Testergebnisse sind in Tabelle 1 zusammengefasst.

**Tabelle 1: Verhalten der kathodischen Tauchlacke, die unter Verwendung der Pigmente aus den Beispielen 1 bis 4 sowie den Vergleichsbeispielen 1 und 2 hergestellt wurden**

| **Probe** | **Abscheidestabilität (in d)** | **Gasung Nach 30 Tagen (ml H₂)** |
|---|---|---|
| Beispiel 1 | > 60 d | 12 |
| Beispiel 2 | > 60 d | 5 |
| Beispiel 3 | >60d | 10 |
| Beispiel 4 | > 60 d | 6 |
| Vergleichsbeispiel 1 | < 7 d | 12 |
| Vergleichsbeispiel 2 | < 7 d | Nach 10 Tagen >25ml |

Für die Elektrotauchlacke mit Pigmenten der erfindungsgemäßen Beispiele 1 bis 4 wurden auch nach mehr als 60 Tagen Lagerzeit bei Raumtemperatur reproduzierbare Ergebnisse hinsichtlich des optischen Erscheinungsbildes der beschichteten Testbleche erhalten. Weiterhin zeigten sie keine nennenswerte Gasung in den wässrigen Elektrotauchlacken.

Der Elektrotauchlack mit Pigmenten des Vergleichsbeispiels 1 war ebenfalls gasungsstabil, wies jedoch praktisch keine Abscheidestabilität auf. Die nicht mit einer Beschichtung versehenen Aluminiumeffektpigmente des Vergleichsbeispiels 2 sind im Elektrotauchlack weder gasungsstabil noch besitzen sie ausreichende Abscheidestabilität.

### Vergleichsbeispiel 3 (Metalleffektpigmenthaltiger Pulverlack):

9 g eines handelsüblichen Metalleffektpigments für Pulverlack, Spezial PCA 214, d50 = 32 µm (Fa. Eckart GmbH & Co. KG), werden mit 291 g eines Pulverklarlacks, AL 96 Polyester PT 910 System (Fa. DuPont), und 0,6 g eines sogenannten "free-flowadditives", Acematt OK 412 (Fa. Degussa), in einem Plastikbeutel innig miteinander vermengt. Der Inhalt wird anschließend direkt in einen Mischbehälter umgefüllt, welcher vom Aufbau und Form einem handelsüblichen Küchenmixgerät gleicht (Thermomix der Fa. Vorwerk), und 4 Minuten bei 25°C auf einer mittleren Rührgeschwindigkeitsstufe vermengt. Diese Vorgehensweise entspricht dem im Pulverlack gängigen "dry-blend-Verfahren". Der so hergestellte Pulverlack wird mittels der üblichen Korona-Aufladungstechnik (GEMA Elektrostatikspritzpistole PG 1-B) auf ein übliches Prüfblech ("Q-Panel") appliziert. Die Applikationsbedingungen der hier angewandten Pulverlacktechnik entsprechen den folgeriden:
Pulverschlauchanschluss: 2 bar; Spülluftanschluss: 1,3 bar Spannung: 60 kV; Materialflussregler: ca. 50 % Abstand Pistole-Blech: ca. 30 cm.
   Anschließend erfolgt das Einbrennen und die Vernetzung des Pulverlacksystems im Ofen. Die Einbrennzeit beträgt 10 Minuten bei einer Temperatur von 200 °C. Die bei diesem Verfahren zu erzielende Trockenschichtstärke beträgt 50-75 µm.

### Vergleichsbeispiel 4 (Metalleffektpigmenthaltiger Pulverlack):

Wie Vergleichsbeispiel 3, jedoch wurde als Metalleffektpigment Spezial PCA 9155, d50 = 16 µm (Fa. Eckart GmbH & Co. KG) verwendet.

Die unterschiedlichen Applikationen bei den erfindungsgemäßen Beispielen 1 bis 4 wurden mit den nach Pulverlacktechnologie beschichteten Substraten der Vergleichsbeispiele 3 und 4 verglichen. Zur vergleichenden Beurteilung wurden, wie aus den erfindungsgemäßen Beispielen 1 bis 4 und den Vergleichsbeispielen 3 und 4 ersichtlich, Aluminiumeffektpigmente ähnlicher Teilchengröße und coloristischer Eigenschaften eingesetzt.

Überraschenderweise zeigen die Applikationen bei den erfindungsgemäßen Beispielen 1 bis 4 eine hervorragende Deckfähigkeit, welche in Güte und Qualität der Pulverlackbeschichtung der Vergleichsbeispiele 3 und 4 entspricht.

Der Vergleich der optischen Eigenschaften erfolgt über den visuellen Eindruck des Beobachters. Überraschenderweise zeigt sich hier, dass die erfindungsgemäßen Beispiele 1 bis 4 hinsichtlich Helligkeit und metallischem Effekt keinen nennenswerten Unterschiede zur konventionellen Pulverlackapplikation bei den Vergleichsbeispielen 3 und 4 aufweisen.

Bei der Beurteilung der optischen Eigenschaften wird Bezug auf die DIN 53230 genommen. Bei der Prüfung von Anstrichstoffen, Lackierungen und ähnlichen Beschichtungen müssen die Eigenschaften und/oder deren Änderungen oft subjektiv beurteilt werden. Die DIN 53 230 legt für diesen Fall ein einheitliches Bewertungssystem fest. In diesem wird beschrieben, wie Prüfergebnisse, welche nicht durch unmittelbar erhaltene Messwerte angegeben werden können, zu bewerten sind.

Zur Beurteilung der Lackierungen, die mit Pigmenten gemäß den erfindungsgemäßen Beispielen. 1 bis 4 und den Vergleichsbeispielen 1 bis 4 erhalten wurden, wird Bezug auf die in der DIN 53 230 unter 2.1 erläuterten "Festen Bewertungsskala" genommen. Diese feste Bewertungsskala stellt eine Skala zur Bewertung des Grades von Eigenschaften dar. In ihr wird der bestmögliche Wert mit der Kennzahl 0, der geringstmögliche Wert mit der Kennzahl 5 bezeichnet, wobei der Begriff "geringstmöglicher Wert" so zu verstehen ist, dass eine Veränderung oder Verschlechterung über diesen Wert hinaus anwendungstechnisch nicht mehr von Interesse ist. In Tab. 2 sind die in Bezug auf die DIN 53230 Abs.2.1 ermittelten coloristischen und optischen Eigenschaften wiedergegeben. Die Ermittlung der Kennzahlen erfolgte durch den subjektiven Eindruck mehrerer Personen. In allen Fällen konnte eine Übereinstimmung des subjektiven Eindrucks der beurteilenden Personen festgestellt werden.

**Tab.2: Optischer Vergleich der Elektrotauchlackapplikationen der Pigmente der erfindungsgemäßen Beispiele 1 bis 4, der Vergleichsbeispiele 1 bis 2 sowie der Pulverlackapplikationen der Vergleichsbeispiele 3 und 4**

| Probe | Mittlere Teilchengröße D₅₀ [µm] | Deckfähigkeit [Kennzahl] | Helligkeit [Kennzahl] | Genereller visueller Eindruck |
|---|---|---|---|---|
| erfindungsgemäßes Beispiel 1 | 18 | 0 | 1 | sehr metallisch, geringerer "sparkling"-Effekt |
| erfindungsgemäßes Beispiel 2 | 18 | 0 | 1 | sehr metallisch, geringerer "sparkling"- Effekt |
| erfindungsgemäßes Beispiel 3 | 18 | 0 | 1 | sehr metallisch, geringerer "sparkling"- Effekt |
| erfindungsgemäßes Beispiel 4 | 32 | 1 | 0 | Sehr guter metallischer "sparkling"-Effekt |
| Vergleichsbeispiel 1 | 18 | 3 | 3 | geringerer metallischer Effekt durch fehlende Deckfähigkeit |
| Vergleichsbeispiel 2 | 18 | 5 | 5 | Praktisch kein Metalleffektpigment abgeschieden |
| Vergleichsbeispiel 3 | 32 | 0 | 1 | Sehr guter metallischer "sparkling"-Effekt |
| Vergleichsbeispiel 4 | 16 | 0 | 0 | sehr metallisch, geringerer "sparkling"-Effekt |

Der oben aufgezeigte Vergleich lässt erkennen, dass die Applikationen mit den erfindungsgemäßen Elektrotauchlackpigmenten und Pigmentpräparationen gemäß den Beispielen 1 bis 4 hinsichtlich optischer Eigenschaften vergleichbar sind mit den schon seit vielen Jahren im Markt etablierten Pulverlackpigmenten und - applikationen. Aus dem Vergleich der Kennzahlen der Elektrotauchlackierungen, die unter Verwendung der erfindungsgemäßen Beispiele 1 bis 4 erhalten wurden, mit den Pulverlackierungen bei den Vergleichsbeispielen 3 und 4 geht eindeutig hervor, dass die optischen Eigenschaften in Bezug auf Deckung, Glanz und metallischen Effekt nahezu identisch sind.

Die Lackierungen bei Vergleichsbeispiel 1, bei dem das Beschichtungsmittel erst im letzten Schritt der Elektrotauchlackherstellung direkt in selbiges eingetragen wurde, weist Abweichungen auf. Bei diesen Varianten zeigen sich deutliche Einbußen hinsichtlich Deckung, Glanz und einhergehend damit im metallischen Effekt.

Ein ohne Beschichtungsmittel behandeltes Metalleffektpigment (Vergleichsbeispiel 2) lässt sich im kathodischen Elektrotauchlack bzw. bei der Elektrotauchlackierung praktisch nicht abscheiden, obwohl das Metalleffektpigment eine Kunstharzhülle aufweist.

Es wird vermutet, dass es notwendig ist, dass das Beschichtungsmittel mit protonierbarer oder positiv geladener aminofunktioneller Gruppe unmittelbar auf das Metalleffektpigment aufgebracht werden muss und nicht später zu dem Elektrotauchlack zugegeben werden kann. Es wird weiter vermutet, dass das Beschichtungsmittel mit seinen funktionellen Gruppen zur Anhaftung oder Anbindung eine physisorptive und/oder chemisorptive Anhaftung oder Anbindung mit der Pigmentoberfläche ausbildet, welche dann eine entscheidende Schlüsselrolle im Abscheideverhalten des Pigments zu spielen scheint.

## Patentansprüche

1. Elektrotauchlackpigmente,
wobei die Elektrotauchlackpigmente plättchenförmige, mit wenigstens einem Beschichtungsmittel beschichtete Metalleffektpigmente sind und das Beschichtungsmittel
a) eine oder mehrere funktionelle Gruppen zur Anhaftung oder Anbindung an die Metalleffektpigmentoberfläche oder an eine auf der Metalleffektpigmentoberfläche aufgebrachte Kunstharzoberfläche und/oder anorganische Beschichtung aufweist, wobei eine oder mehrere funktionellen Gruppen des Beschichtungsmittels aus der Gruppe, die aus Phosphonsäureester-, Phosphorsäureester-, Carboxylat-, Metallsäuraester-, Alkoxysilyl-, Silanol-, Sulfonat-, Hydroxyl-, Polyol-Gruppen und deren Mischungen besteht, ausgewählt ist, und
b) mindestens eine aminofunktionelle Gruppe aufweist, wobei die aminofunktionelle Gruppe protonierbar oder positiv geladen ist,
wobei die an die Pigmentoberfäche anhaftenden oder anbindenden Gruppen und die protonierbare oder positiv geladene aminofunktionelle Gruppe über eine lineare oder verzweigte Alkylkette, die optional Heteroatome oder -gruppen enthalten kann, mit 1 bis 20 C-Atomen miteinander verbunden sind.

2. Elektrotauchlackpigmente nach Anspruch 1,
**dadurch gekennzeichnet,**
**dass** die Metallevektpigmente eine gegenüber wässrigen Systemen oder Medien korrosionsinhibierende Beschichtung aufweisen.

3. Elektrotauchlackpigmente nach Anspruch 1 oder 2,
**dadurch gekennzeichnet,**
**dass** die Metalleffektpigmente aus der Gruppe, enthaltend mit anorganischen und/oder organischen Beschichtungen versehene Metalleffektpigmente, mit anorganisch/organischen Mischschichten versehene Metafferfektpigmente, mit Kunstharz beschichtete Metalleffektpigmente, oberflächlich oxidierte Metalleffektpigmente und eingefärbte Metalleffektpigmente, ausgewählt sind.

4. Elektrotauchlackpigmente nach einem der Ansprüche 1 bis 3,
**dadurch gekennzeichnet,**
**dass**, die plättchenförmigen Metalleffektpigmente aus Metallen oder Legierungen bestehen, die aus der Gruppe, die aus Aluminium, Kupfer, Zink,
Zinn, Messing, Eisen, Titan, Chrom, Nickel, Stahl, Silber und Legierungen und Gemischen davon besteht, ausgewählt sind.

5. Elektrotauchlackpigmente nach einem der Ansprüche 3 oder 4,
**dadurch gekennzeichnet,**
**dass** die Kunstharzbeschichtung des Metalleffektpigmentes mindestens ein Polyacryrat und/oder Polymethacrylat enthält.

6. Elektrotauchlackpigmente nach einem der Ansprüche 2 bis 4,
**dadurch gekennzeichnet**
**dass** die korrosionsinhibierende Beschichtung im wesentlichen Metalloxid, vorzugsweise Siliciumdioxid, enthält oder daraus besteht.

7. Elektrotauchlackplgmente nach einem der Ansprüche 2 bis 4,
**dadurch gekennzeichnet,**
**dass** das korrosionsinhibierende Beschichtung eine oberflächliche Oxidschicht ist.

8. Elektrotauchlackpigmente nach Anspruch 6 oder 7,
**dadurch gekennzeichnet,**
**dass** die Oxidschicht zusätzlich Farbpigmente enthält.

9. Elektrotauchlackpigmente nach einem der vorhergehenden Ansprüche, **dadurch gekennzeichnet,**
**dass** das Beschichtungsmittel in einer Menge von 1 bis 100 Gew.%, bezogen auf das Gewicht des metallischen Anteils des Metalleffektpigmentes, auf dem Pigment aufgebracht ist.

10. Elektrotauchlackpigmente nach einem der vorhergehenden Ansprüche,
**dadurch gekennzeichnet,**
**dass** das Beschichtungsmittel ein kathodisches Elektratauchlack-Bindemittel ist.

11. Verfahren zur Herstellung von Elektrotauchlackpigmenten nach einem der Anspruche 1 bis 10,
**dadurch gekennzeichnet,**
**dass** das Verfahren die folgenden Schritte umfasst:
(a) Beschichten eines Metalleffektpigmentes mit dem in einem Lösemittel gelösten oder dispergierten Beschichtungsmittel mit aminofunktioneller Gruppe, wobei die aminofunktionelle Gruppe protonierbar oder positiv geladen ist,
(b) optional Trocknen der im Schritt (a) mit dem Beschichtungsmittel beschichteten Metalleffektpigmente,
(c) optional Anpasten der in Schritt (b) getrockneten Metalleffektpigmente,

12. Verfahren nach Anspruch 11,
**dadurch gekennzeichnet,**
**dass** Schritt (a) und (b) zu einem Schritt zusammengefasst sind, indem das Beschichtungsmittel als Lösung oder Dispersion auf in einem Gasstrom bewegte Metalleffektpigmente aufgebracht wird.

13. Verwendung von Elektrotauchlackpigmenten nach einem der Ansprüche 1 bis 10 einem kathodischen Elektrotauchlack oder beim kathodischen Elektrotauchlackieren.

14. Kathodischer Elektrotauchlack enthaltend Elektrotauchlackpigmente nach einem der Ansprüche 1 bis 10.

## Claims

1. Electrocoat pigments,
which electrocoat pigments are plate-shaped metal effect pigments coated with at least one coating material and the coating material may contain
a) one or more functional groups to impart an adhesion or binding action on the metal effect pigment surface or on a synthetic resin surface and/or an organic coating applied to the metal effect pigment surface, and one or more functional groups of the coating material are selected from the group comprising phosphonic acid ester, phosphoric acid ester, carboxylate, metal acid ester, alkoxysilyl, silanol, sulphonate, hydroxyl, and polyol groups and
mixtures thereof, and
b) at least one amino-functional group, and the amino-functional group can be protonated or is positively charged, and the groups adhering or binding on the pigment surface or the protonatable or positively charged amino-functional group are bonded to one another by means of a linear or branched alkyl chain with 1 to 20 C atoms, optionally containing hetero atoms or groups.

2. Electrocoat pigments as claimed in claim 1,
**characterised in that**
the metal effect pigments have a coating which inhibits corrosion by aqueous systems or media.

3. Electrocoat pigments as claimed in claim 1 or 2,
**characterised in that**
the metal effect pigments are selected from the group containing metal effect pigments provided with inorganic and/or organic coatings, metal effect pigments provided with inorganic/organic mixed coatings, metal effect pigments coated with synthetic resin, surface-oxidised metal effect pigments and coloured metal effect pigments.

4. Electrocoat pigments as claimed in one of claims 1 to 3,
**characterised in that**
the plate-shaped metal effect pigments contain metals or alloys selected from the group comprising aluminium, copper, zinc, tin, brass, iron, titanium, chromium, nickel, steel, silver and alloys and mixtures thereof.

5. Electrocoat pigments as claimed in one of claims 3 or 4,
**characterised in that**
the synthetic resin coating of the metal effect pigments contains at least one polyacrylate and/or polymethacrylate.

6. Electrocoat pigments as claimed in one of claims 2 to 4,
**characterised in that**
the corrosion-inhibiting coating essentially contains or comprises metal oxide, preferably silicon dioxide.

7. Electrocoat pigments as claimed in one of claims 2 to 4,
**characterised in that**
the corrosion-inhibiting coating is a superficial oxide coating.

8. Electrocoat pigments as claimed in claim 6 or 7,
**characterised in that**
the oxide coating additionally contains coloured pigments.

9. Electrocoat pigments as claimed in one of the preceding claims,
**characterised in that**
the coating material is applied to the pigment in a quantity of 1 to 100% by weight, relative to the weight of the metallic proportion of the metal effect pigment.

10. Electrocoat pigments as claimed in one of the preceding claims,
**characterised in that**
the coating material is a cathodic electrocoat binding agent.

11. Method of producing electrocoat pigments as claimed in one of claims 1 to 10,
**characterised in that**
the method comprises the following steps:
(a) coating a metal effect pigment with the coating material containing an amino-functional group dissolved or dispersed in a solvent, which amino-functional group can be protonated or is positively charged,
(b) optionally drying the metal effect pigments coated with the coating material in step (a),
(c) optionally converting the metal effect pigments dried in step (b) to a paste.

12. Method as claimed in claim 11,
**characterised in that**
steps (a) and (b) are combined into one step by applying the coating material as a solution or dispersion to metal effect pigments moved through a gas flow.

13. Use of electrocoat pigments as claimed in one of claims 1 to 10 in a cathodic electrocoat material or during a cathodic electrocoating process.

14. Cathodic electrocoat material containing electrocoat pigments as claimed in one of claims 1 to 10.

## Revendications

1. Pigments pour peinture cataphorétique,
les pigments pour peinture cataphorétique étant des pigments à effet métallisé en forme de plaquettes revêtues d'au moins un moyen de revêtement et le moyen de revêtement
a) comportant un ou plusieurs groupes fonctionnels pour l'adhérence ou l'attache sur la surface du pigment à effet métallisé ou sur une surface de résine synthétique et/ou sur un revêtement inorganique déposés sur la surface du pigment à effet métallisé, sachant qu'un ou plusieurs groupes fonctionnels du moyen de revêtement sont choisis parmi le groupe consistant en des groupes esters d'acides phosphoniques, esters d'acides phosphoriques, carboxylates, esters d'acides de métaux, alcoxysilyles, silanols, sulfonates, hydroxyles, polyols et en leurs mélanges, et
b) comportant au moins un groupe aminofonctionnel, le groupe aminofonctionnel pouvant être protoné ou étant chargé positivement, sachant que les groupes adhérant ou se fixant à la surface des pigments et les groupes aminofonctionnels pouvant être protonés ou étant chargés positivement sont liés ensemble par une chaîne alkyle linéaire ou ramifié, qui peut contenir en option des hétéroatomes ou des hétéro-groupes, comptant 1 à 20 atomes de carbone.

2. Pigments pour peinture cataphorétique selon la revendication 1,
**caractérisés en ce que**
les pigments à effet métallisé comportent un revêtement inhibant la corrosion vis-à-vis de systèmes ou de milieux aqueux.

3. Pigments pour peinture cataphorétique selon la revendication 1 ou 2,
**caractérisés en ce que**
les pigments à effet métallisé sont choisis parmi le groupe contenant des pigments à effet métallisé dotés de revêtements inorganiques et/ou organiques, des pigments à effet métallisé dotés de couches mixtes inorganiques / organiques, des pigments à effet métallisé revêtus de résine synthétique, des pigments à effet métallisé oxydés en surface et des pigments à effet métallisé teintés.

4. Pigments pour peinture cataphorétique selon l'une quelconque des revendications 1 à 3,
**caractérisés en ce que**
les pigments à effet métallisé en forme de plaquettes consistent en des métaux ou des alliages qui sont choisis parmi le groupe qui consiste en l'aluminium, le cuivre, le zinc, l'étain, le laiton, le fer, le titane, le chrome, le nickel, l'acier, l'argent et des alliages et des mélanges de ceux-ci.

5. Pigments pour peinture cataphorétique selon l'une quelconque des revendications 3 ou 4,
**caractérisés en ce que**
le revêtement de résine synthétique du pigment à effet métallisé contient au moins un polyacrylate et/ou un polyméthacrylate.

6. Pigments pour peinture cataphorétique selon l'une quelconque des revendications 2 à 4,
**caractérisés en ce que**
le revêtement inhibiteur de corrosion contient essentiellement un oxyde métallique, de préférence du dioxyde de silicium, ou consiste en celui-ci.

7. Pigments pour peinture cataphorétique selon l'une quelconque des revendications 2 à 4,
**caractérisés en ce que**
le revêtement inhibiteur de corrosion est une couche d'oxyde superficielle

8. Pigments pour peinture cataphorétique selon la revendication 6 ou 7, **caractérisés en ce que**
la couche d'oxyde contient en plus des pigments colorés.

9. Pigments pour peinture cataphorétique selon l'une quelconque des revendications précédentes,
**caractérisés en ce que**
le moyen de revêtement est appliqué sur le pigment en une quantité de 1 à 100 % en poids, rapportés au poids de la partie métallique du pigment à effet métallisé.

10. Pigments pour peinture cataphorétique selon l'une quelconque des revendications précédentes,
**caractérisés en ce que**
le moyen de revêtement est un liant cathodique de la peinture cataphorétique.

11. Procédé de production de pigments pour peinture cataphorétique selon l'une quelconque des revendications 1 à 10,
**caractérisé en ce que**
le procédé comprend les étapes suivantes :
a) enduction d'un pigment à effet métallisé par le moyen de revêtement comportant un groupe aminofonctionnel dissous ou dispersé dans un solvant, le groupe aminofonctionnel pouvant être protoné ou étant chargé positivement,
b) en option, séchage des pigments à effet métallisé revêtus à l'étape a) du moyen de revêtement,
c) en option, mise des pigments à effet métallisé séchés à l'étape b) sous forme de pâte.

12. Procédé selon la revendication 11,
**caractérisé en ce que**
les étapes a) et b) sont réunies en une étape **en ce que** le moyen de revêtement est appliqué comme solution ou comme dispersion sur les pigments à effet métallisé en mouvement dans un courant de gaz.

13. Utilisation de pigments pour peinture cataphorétique selon l'une quelconque des revendications 1 à 10 dans une peinture cataphorétique ou lors du processus de peinture cataphorétique.

14. Peinture cataphorétique contenant des pigments pour peinture cataphorétique selon l'une quelconque des revendications 1 à 10.
